(19) Europäisches Patentamt
European Patent Office
Office européen des brevets

(11) Veröffentlichungsnummer: **0 200 861**
**B1**

(12) **EUROPÄISCHE PATENTSCHRIFT**

(45) Veröffentlichungstag der Patentschrift: **12.09.90**

(21) Anmeldenummer: **86102554.2**

(22) Anmeldetag: **27.02.86**

(51) Int. Cl.⁵: **C 08 G 18/38**, C 08 G 18/10, C 09 D 175/04, C 08 G 59/66, C 08 F 299/06

(54) **Verfahren zur Herstellung von Mercaptogruppen aufweisenden Oligourethanen, die nach diesem Verfahren erhältlichen Oligourethane und ihre Verwendung.**

(30) Priorität: **09.03.85 DE 3508428**

(43) Veröffentlichungstag der Anmeldung:
**12.11.86 Patentblatt 86/46**

(45) Bekanntmachung des Hinweises auf die Patenterteilung:
**12.09.90 Patentblatt 90/37**

(84) Benannte Vertragsstaaten:
**AT BE CH DE FR GB IT LI NL SE**

(56) Entgegenhaltungen:
**DE-A-2 250 543**
**FR-A-1 525 806**
**FR-A-2 053 561**
**US-A-3 226 345**

(73) Patentinhaber: **BAYER AG**
**D-5090 Leverkusen 1 Bayerwerk (DE)**

(72) Erfinder: **Schmidt, Manfred, Dr.**
**Zeisigstrasse 5**
**D-4047 Dormagen (DE)**
Erfinder: **Wellner, Wolfgang, Dr.**
**Hahnenweg 1**
**D-5000 Köln 80 (DE)**
Erfinder: **Pedain, Josef, Dr.**
**Haferkamp 6**
**D-5000 Köln 80 (DE)**
Erfinder: **Gruber, Hermann, Dr.**
**Paul-Klee-Strasse 8**
**D-5090 Leverkusen (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 200 861 B1

Courier Press, Leamington Spa, England.

**Beschreibung**

Die vorliegende Erfindung betrifft ein neues Verfahren zur Herstellung von Mercaptogruppen aufweisenden Oligourethanen aus organischen Polyisocyanaten, organischen Polyhydroxylverbindungen und Mercaptoalkanolen, wobei bei der Umsetzung der Mercaptoalkanole bestimmte, saure Ester der Phosphorsäure als Katalysatoren mitverwendet werden, die nach diesem Verfahren erhältlichen Oligourethane, sowie ihre Verwendung als Bindemittel für oxidativ härtbare Beschichtungs- und Dichtungsmassen, als Zusatzmittel für Epoxidharze bzw. als Vernetzer für olefinische Doppelbindungen aufweisende Kunststoffe oder Kunststoffvorprodukte.

Mercaptogruppen aufweisende Oligomere bzw. Polymere, die oxidativ vernetzt bzw, ausgehärtet werden können sind bereits bekannt (vgl. z.B. DE—OS 2 739 117, DE—OS 2 557 088, DE—AS 2 363 856 oder DE—OS 3 121 384).

Der wesentliche Vorteil dieser Bindemittel gegenüber anderen Substanzklassen (wie z.B. Oligourethanen mit NCO-Endgruppen) besteht u.a. in der Tatsache, daß sie auch in Gegenwart von Wasser, das durch feuchte Pigmente oder Zusatzstoffe oder aus der Atmosphäre hinzukommen kann, aushärten und blasenfreie Polymere bilden.

Andererseits haben Oligourethane mit freien NCO-Gruppen, die als Bindemittel für Dichtungs- und Beschichtungsmassen eingesetzt werden, neben dem Nachteil der Bildung von Blasen bei der Aushärtung mit Wasser (d.h. Luftfeuchtigkeit) mehrere Vorteile: Sie eignen sich z.B. zur Herstellung sehr witterungsbeständiger Massen mit hoher Dauerelastizität, hoher Zähigkeit, mit gutem Abriebwiderstand und Beständigkeit gegenüber Lösemitteln und anderen chemischen Einflüssen.

Es hat deshalb nicht an Versuchen gefehlt, die wertvollen Eigenschaften der Polyurethane mit dem Aushärtungsmechanismus über Mercapto-Gruppen zu verknüpfen. Besonders in der DE—OS 1 770 259, DE—AS 1 645 500 (=FR—A—1 525 806) bzw. FR—A—2 053 561 werden Oligourethane mit Mercaptoendgruppen beschrieben. Sie werden hergestellt, indem man zunänchst ein Polyol mut überschüssigem aromatischem Diisocyanat zu einem NCO-Gruppen enthaltenden Prepolymer umgesetzt und dieses danach mit einem Alkohol, der eine HS-Gruppe enthält, urethanisiert. Man erhält auf diesem Wege gemäß DE—OS 1 770 259 bzw. DE—AS 1 645 500 Oligourethane mit Mercapto-Endgruppen, die blasenfrei ohne Schäumen auch in Gegenwart von Feuchtigkeit oxidativ aushärten.

Auch die DE—OS 3 121 384 beschreibt Oligourethane mit endständigen Mercaptogruppen. Im Gegensatz zu der DE—OS 1 770 259 bzw. DE—AS 1 645 500 wird hier jedoch als Isocyanatkomponente 1-Isocyanatomethyl-1.3.3-trimethyl-5-isocyanatocyclohexan eingesetzt. Nach der DE—AS 3 121 384 werden so Beschichtungs- und Dichtungsmassen erhalten, die sich insbesondere durch hohe Lichtechtheit neben ausgezeichneter Alkali- und Wärmestabilität auszeichnen.

Obwohl die in den genannten Vorveröffentlichungen beschriebenen Produkte grundsätzlich wertvolle Bindemittel für Abdichtungs- und Beschichtungsmassen darstellen sind sie mehr oder weniger stark mit dem Nachteil einer für viele Anwendungszwecke zu hohen Viskosität behaftet, so daß ein lösungsmittelfreier Einsatz oft nur unter Verwendung von beträchtlichen Mengen an Weichmachern möglich ist. Ein gewisser Fortschritt wurde zwar mit den Systemen der DE—OS 3 121 384 erzielt, jedoch ist eine weitere Senkung der Viskosität der in dieser Vorveröffentlichtung beschriebenen Produkte nach wie vor wünschenswert.

Wie nunmehr überraschend gefunden wurde gelingt es, die Viskosität von Mercaptogruppen aufweisenden Oligourethanen dadurch zu erniedrigen, daß man die Herstellung der Produkte durch Umsetzung von Mercaptoalkanolen mit organischen Polyisocyanaten und unterschüssigen Mengen an organischen Polyhydroxylverbindungen bzw. mit aus den letztgenannten Ausgangskomponenten hergestellten NCO-Prepolymeren in Gegenwart von bestimmten, nachstehend näher beschriebenen sauren Estern der Phosphorsäure durchführt.

Gegenstand der Erfindung ist somit ein Verfahren zur Herstellung von Oligourethanen mit endständigen Mercaptogruppe eines aus der Art und den Mengenverhältnissen der Ausgangsmaterialien errechenbaren mittleren Molekulargewichts von 2000—10000 durch Umsetzung von

a) organischen Polyisocyanaten mit

b) unterschüssigen Mengen an organischen Polyhydroxylverbindungen und

c) 0,8 bis 1,2-fach äquivalenten Mengen, bezogen auf den sich aus dem zum Einsatz gelangenden Mengenverhältnis von a) und b) ergebenden Überschuß an Isocyanatgruppen bzw. die im gegebenenfalls von überschüssigem Polyisocyanat a) befreiten Reaktionsprodukt von a) und b) vorliegenden Isocyanatgruppen einerseits und Hydroxylgruppen der Komponente c) andererseits, eines Mercaptoalkanols,

dadurch gekennzeichnet, daß man die Umsetzung mit dem Mercaptoalkanol c) in Gegenwart von

d) 0,01 bis 5 Gew.-%, bezogen auf dus Gewicht der Komponenten a), b) und c), mindestens eines, mindestens eine an Phosphor gebundene Hydroxylgruppe aufweisenden Esters der Phosphorsäure durchführt.

Gegenstand der Erfindung ist auch die Verwendung der nach diesem Verfahren erhältlichen, Mercaptogruppen aufweisenden Oligourethane als Bindemittel für oxidativ härtbare Beschichtungs- und Dichtungsmassen.

Gegenstand der Erfindung ist auch die Verwendung der nach diesem Verfahren erhältlichen, Mercaptogruppen aufweisenden Oligourethane als Zusatzmittel für Epoxidharze.

Gegenstand der Erfindung ist schließlich aus die Verwendung der nach diesem Verfahren erhältlichen, Mercaptogruppen aufweisenden Oligourethane als Vernetzer für beliebige olefinische Doppelbindungen aufweisende Kunststoffe oder Kunststoffvorprodukte.

Geeignete Ausgangskomponenten a) sind aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel

$$Q(NCO)_n$$

in der

n—2 bis 4, vorzugsweise 2, und

Q—einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen, oder einen araliphatischen Kohlenwasserstoffrest mit 8 bis 15, vorzugsweise 8 bis 13 C-Atomen

bedeuten.

Beispiele für derartige Polyisocyanate sind Ethylendiisocyanat, Tetramethylendiisocyanat, Hexamethylendiisocyanat, Dodecamethylendiisocyanat, 1,3-Diisocyanatocyclobutan, 1-Isocyanato-3,3,5-trimethyl-5-isocyanatomethyl-cyclohexan (IPDI), 4,4'-Diisocyanato-dicyclohexylmethan, 2,4'-Diisocyanato-dicyclohexylmethan, 2,4-Diisocyanatotoluol, 2,6-Diisocyanatotoluol, sowie beliebige Gemische der beiden letztgenannten Isomeren, 2,4'-Diisocyanatodiphenylmethan, 4,4'-Diisocyanatodiphenylmethan, sowie beliebige Gemische dieser beiden Isomeren oder mit ihren höheren Homologen, oder 1,5-Diisocyanatonaphthalin. Beliebige Gemische der beispielhaft genannten Polyisocyanate können selbstverständlich ebenfalls eingesetzt werden. Zu den besonders bevorzugten Ausgangspolyisocyanaten gehören IPDI, 2,4-Diisocyanatotoluol, dessen technische Gemische mit 2,6-Diisocyanatotoluol oder auch Gemische von IPDI mit den beiden letztgenannten Isomeren.

Bei den Ausgangskomponenten b) handelt es sich um beliebige organische Polyhydroxylverbindungen oder Gemische organischer Polyhydroxylverbindungen einer (mittleren) Hydroxylfunktionalität von mindestens 2, vorzugsweise von 2,5 bis 4 und eines aus der Funktionalität und dem Hydroxylgruppengehalt errechenbaren (mittleren) Molekulargewichts von vorzugsweise mindestens 2000 und besonders bevorzugt von 4000—7000.

Diese Angaben bezüglich der Hydroxylfunktionalität und des Molekulargewichts beziehen sich im Falle der Verwendung von Gemischen von verschiedenen Polyhydroxylverbindungen auf die statistischen Mittelwerte dieser Gemische. Hieraus folgt, daß einzelne Komponenten dieser Gemische auch eine außerhalb der genannten Bereiche liegende Hydroxylfunktionalität und insbesondere ein außerhalb dieser Bereiche liegendes Molekulargewicht aufweisen können.

Geeignete Polyhydroxylverbindungen, die als Komponente b) oder als Teil der Komponente b) Verwendung finden können sind insbesondere die aus der Polyurethanchemie an sich bekannten Polyesterpolyole, die aus der Polyurethanchemie an sich bekannten Polyetherpolyole und gebenenfalls die aus der Polyurethanchemie an sich bekannten einfachen, niedermolekularen Polyhydroxylverbindungen, die in geringen Anteilen in der Komponente b) vorliegen können.

Die in Frage kommenden Polyesterpolyole sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, zB. durch Halogenatome, substituiert und/oder ungesättigt sein.

Als Beispiele für solche Carbonsäuren und deren Derivate seien genannt;

Bernsteinsäure, Adipinsäure, Korksäur, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid. Als mehrwertige Alkohole kommen z.B. Ethylenglykol, Propylenglykol-(1,2) und -(1,3), Butylenglykol-(1,4) und -(2,3), Hexandiol-(1,6), Octandiol-(1,8), Neopentylglykol, 1,4-Bishydroxymethylcyclohexan, 2-Methyl-1,3-propandiol, Glycerin, Trimethylolpropan, Hexantriol-(1,2,6), Butantriol-(1,2,4), Trimethylolethan, Diethylenglykol, Triethylenglykol, Tetraethylenglykol, Dipropylenglykol, sowie Dibutylenglykol in Frage. Die Polyesterpolyole weisen im allgemeinen Säurezahlen von maximal 5 und Hydroxyzahlen von 40 bis 112 auf.

Als Polyetherpolyole, die als Komponente b) oder als Teil der Komponente b) Verwendung finden können, sind beispielsweise solche geeignet, die durch Polymerisation von Epoxiden wie Ethylenoxid, Propylenoxid, Butylenoxid, Tetrahydrofuran, Styroloxid oder Epichlorhydrin mit sich selbst, z.B. in Gegenwart von Lewis-Katalysatoren wie $BF_3$, oder durch Anlagerung dieser Epoxide, vorzugsweise von Ethylenoxid und Propylenoxid, gegebenenfalls im Gemisch oder nacheinander, an Startkomponenten mit reaktionsfähigen Wasserstoffatomen erhalten werden können. Geeignete Startermoleküle sind beispielsweise Wasser oder einfache, mehrwertige Alkohole, der bezüglich der Herstellung der Polyesterpolyole bereits oben beispielhaft genannten Art.

Als gegebenenfalls in geringen Mengen in der Komponente b) mitzuverwendende einfache, d.h.

niedermolekulare Polyole kommen beispielsweise die oben bezüglich der Herstellung der Polyesterpolyole beispielhaft genannten, niedermolekularen Polyhydroxylverbindungen in Betracht.

Besonders bevorzugt handelt es sich bei der Komponente b) um Polyetherpolyole bzw. Gemische von Polyetherpolyolen einer (mittleren) OH-Funktionalität von mindestens 2, vorzugsweise von 2,5 bis 4 und eines aus der Funktionalität und dem Hydroxylgehalt errechenbaren (mittleren) Molekulargewicht von 2000 bis 10 000, vorzugsweise 4000 bis 7000.

Als Komponente c) können beim erfindungsgemäßen Verfahren beliebige Mercaptoalkanole, d.h. beliebige Verbindungen eingesetzt werden, die neben einer Mercaptogruppe eine alkoholisch gebundene Hydroxylgruppe aufweisen. Diese Verbindungen weisen im allgemeinen ein Molekulargewicht von 78 bis 134 auf. Beispiele sind 2-Mercaptoethanol, 1-Hydroxy-2-mercapto-propan, 1-Hydroxy-3-mercapto-propan, 1-Mercapto-4-hydroxybutan oder 1-Hydroxy-6-mercapto-hexan. Es können jedoch auch Mercaptoalkanole eingesetzt werden, die durch ihr Herstellungsverfahren bedingt, z.B. durch Anlagerung von Disulfiden an Alkenole, auch Heteroelemente z.B. Sulfidbrücken oder Estergruppen enthalten. In diesen Fällen liegen die Molekulargewichte natürlich entsprechend höher. Besonders bevorzugt wird 2-Mercaptoethanol als Komponente c) beim erfindungsgemäßen Verfahren eingesetzt.

Als Komponente d) werden beim erfindungsgemäßen Verfahren beliebige saure Ester der Phosphorsäure eingesetzt, d.h. beliebige Ester der Phosphorsäure, die mindestens eine an Phosphor gebundene Hydroxylgruppe aufweisen. Beliebige Gemische derartiger Ester der Phosphorsäure können selbstverständlich ebenfalls verwendet werden. In Betracht kommen beispielsweise Verbindungen der allgemeinen Formel

$$(RO)_x-\overset{\displaystyle O}{\overset{\|}{P}}-(OH)_{3-x}$$

in welcher

x: für 1 oder 2 steht und

R: für einen Alkylrest mit 1 bis 18, vorzugsweise 1 bis 8 Kohlenstoffatomen, einen Phenylrest oder einen Aralkylrest mit 7 bis 18, vorzugsweise 7 Kohlenstoffatomen steht.

Beispiele geeigneter Phosphorsäureester sind Dimethylphoshat, Diethylphosphat, Bis-(n-butyl)-phosphat, Bis-(n-hexyl)-phosphat, Bis-(n-dodecyl)-phosphat, Bis-(n-stearyl)-phosphat, Diphenylphosphat, Dibenzylphosphat, Bis-(2-ethylhexyl)-phosphat, Mono-tridecyl-phosphat oder Monobenzylphosphat. Die Dialkyl-, Diphenyl- bzw. Diaralkyl-Ester der Phosphorsäure sind gegenüber den Monoalkyl-, Monophenyl- bzw. Monoaralkyl-Estern bevorzugt. Besonders bevorzugt sind die entsprechenden Dialkylester. Ganz besonders bevorzugt werden Bis-(n-butyl)-phosphat oder Bis-(2-ethylhexyl)-phosphat als Komponente d) eingesetzt.

Die beispielhaft genannten Ester der Phosphorsäure werden beim erfindungsgemäßen Verfahren in einer Menge von 0,01 bis 5 Gew.-%, vorzugsweise von 0,05 bis 2 Gew.-%, bezogen auf das Gesamtgewicht der Komponenten a), b) und c) eingesetzt.

Bei der Durchführung des erfindungsgemäßen Verfahrens kommen die Ausgangskomponenten a) und b) in, einem NCO/OH-Äquivalentverhältnis von 1,8:1 bis 4:1, vorzugsweise 2:1 bis 3:1 entsprechenden Mengen zum Einsatz. Es ist auch möglich einen hohen Überschuß der Komponente a) einzusetzen und nicht umgesetztes, überschüssiges Polyisocyanat a), gegebenenfalls anschließend, beispielsweise destillativ, aus dem resultierenden Reaktionsprodukt aus a) und b) zu entfernen. Die Komponente c) wird in einer 0,8—1,2-fach, vorzugsweise ca. 1-fach äquivalenten Menge, bezogen auf den sich aus den Mengenverhältnissen der Komponenten a) und b) ergebenden NCO-Überschuß bzw. die in dem letztgenannten, gegebenenfalls von überschüssigem Polyisocyanat befreitem, Reaktionsprodukt vorliegenden Isocyanatgruppen einerseits und die Hydroxylgruppen der Komponente c) andererseits eingesetzt.

Erfindungswesentlich ist, daß die Umsetzung der Komponente c) in Gegenwart der Komponente d) erfolgt.

Zur Durchführung des erfindungsgemäßen Verfahrens können die Komponenten b), c) und d) vorgemischt und in an sich bekannter Weise mit der Komponente a) zur Reaktion gebracht werden. Bevorzugt ist jedoch eine Ausführungsform der erfindungsgemäßen Verfahrens, gemäß welcher zunächst aus den Komponenten a) und b) in an sich bekannter Weise ein NCO-Präpolymer hergestellt wird, welches in einem zweiten Reaktionsschritt in Gegenwart der Komponente d) mit der Komponente c) zur Umsetzung gebracht wird. Selbstverständlich ist es auch möglich, einen Teil der Komponente b) mit der Gesamtmenge der Komponente a) zu einem NCO-Prepolymeren bzw. einem NCO-Semiprepolymeren umzusetzen, und diesers anschließend mit einem Gemisch aus der Komponente c) und der restlichen Menge der Komponente b) zur Reaktion zu bringen, wobei auch hier die Komponente d) zumindest im letztgenannten Reaktionsschritt im Reaktionsgemisch vorliegt.

Alle genannten Varianten des erfindungsgemäßen Verfahrens werden im allgemeinen bei einer Reaktionstemperatur von 50 bis 150°C, vorzugsweise von 50 bis 120°C durchgeführt. Die erfindungsgemäßen Umsetzungen erfolgen vorzugsweise unter einem Schutzgas, z.B. Stickstoff.

Grundsätzlich ist es, wie bereits angedeutet, auch möglich, die bevorzugte Variante des erfindungsgemäßen Verfahrens dergestalt zu modifizieren, daß die Komponente b) in einem ersten

Reaktionsschritt mit einem sehr hohen Überschuß der Komponente a) zur Umsetzung gebracht wird, worauf sich vor der Umsetzung des so erhaltenen Umsetzungsprodukts mit der Komponente c) eine destillative Entfernung des überschüssigen Isocyanats anschließt.

Die erfindungsgemäße Umsetzung kann in Gegenwart von geeigneten inerten Lösungsmitteln durchgeführt werden. Vorzugsweise erfolgt die Umsetzung jedoch in Abwesenheit von Lösungsmitteln. Auch die Verwendung der an sich bekannten, die Isocyanatadditionsreaktion beschleunigenden Katalysatoren ist möglich und oftmals besonderes bei der Umsetzung der Komponenten a) und b) angezeigt.

Vertreter von erfindungsgemäß zu verwendenden Katalysatoren sind im Kunststoff-Handbuch, Band VII, herausgegeben von Becker und Braun, Carl-Hanser Verlag, München 1983, z.B. auf den Seiten 92—98 beschrieben.

Die Katalysatoren werden, falls überhaupt, in einer Menge zwischen 0,001 und 10 Gew.-%, vorzugsweise zwischen 0,002 und 0,1 Gew.-%, bezogen auf die Gesamtmenge der Komponenten a) und b) eingesetzt.

Gewünschtenfalls ist es auch möglich, nach Beendigung der erfindungsgemäßen Umsetzungen, letzte Spuren an gegebenenfalls noch vorliegenden Isocyanatgruppen aus dem Reaktionsgemisch durch Zusatz eines Kettenabbrechers zu beseitigen. Derartige Kettenabbrecher sind insbesondere einwertige Alkohole oder monofunktionelle Amine wie z.B. n-Butanol, 2-Ethylhexanol, n-Octanol, n-Dodecanol, Cyclohexanol, Ethylenglykolmonoethylether, n-Butyl oder Di-n-butyl-amin, n-Octylamin, n-Stearylamin, N-Methyl-n-stearylamin, Pyrrolidin, Piperidin oder Cyclohexylamin. Diese Kettenabbrecher werden, falls überhaupt in einer Menge eingesetzt, die der noch vorhandenen Restmenge an zu beseitigenden Isocyanatgruppen zumindest äquivalent ist.

Bei den erfindungsgemäßen Verfahrensprodukten handelt es sich um endständige Mercaptogruppen aufweisende Oligourethane eines aus der Art und den Mengenverhältnissen der Ausgangsmaterialien errechenbaren mittleren Molekulargewichts von ca. 2000 bis 10 000. Die SH-Funktionalität der erfindungsgemäßen Verfahrensprodukte entspricht bei der bevorzugten Verwendung von organischen Diisocyanaten als Komponente a) der mittleren Hydroxylfunktionalität der Komponente b).

Die erfindungsgemäßen Verfahrensprodukte zeichnen sich von entsprechenden Mercaptogruppen aufweisenden Oligourethanen, die aus den gleichen Ausgangsmaterialien jedoch ohne Mitverwendung der erfindungswesentlichen Zusatzmittel d) hergestellt worden sind durch eine deutlich erniedrigte Viskosität aus. Dementsprechend handelt es sich bei den erfindungsgemäßen Verfahrensprodukten im allgemeinen um bei Raumtemperatur flüssige Substanzen oder auch um bei Raumtemperatur nicht mehr fließfähige Produkte, die jedoch, im Vergleich zu den entsprechenden Produkten des Standes der Technik, durch eine geringere Menge an Weichmacheröl in einem fließfähigen Zustand überführt werden können. Für diesen Zweck geeignete Weichmacheröle sind beispielsweise die hierfür üblicherweise eingesetzten Phthalate wie z.B. Dibutylphthalat, Dioctylphthalat, Diisodecylphthalat, Dibenzylphthalat oder Butyl-benzylphthalat.

Die erfindungsgemäßen Verfahrensprodukte weisen eine Reihe vorteilhafter Eigenschaften auf: Sie weisen, wie gesagt, eine vergleichsweise erniedrigte Viskosität auf und sind normalerweise ohne die üblichen Weichmacher handhabbar. In Kombination mit geeigneten organischen bzw. anorganischen Oxidationsmitteln wie z.B. Bleidioxid, Mangandioxid oder org. Peroxiden härten sie zu blasenfreien hochmolekularen Kunststoffen aus, die sich durch eine trockene, nicht blockende Oberfläche auszeichnen, und die darüber hinaus eine ausgezeichnete Widerstandsfähigkeit gegenüber Alkali und Wärme aufweisen. Das gleiche gute Eigenschaftsbild erhält man, wenn man die erfindungsgemäßen Verfahrensprodukte in Kombination mit bekannten Katalysatoren der oxidativen Härtung durch Luftsauerstoff aussetzt. Für dieses Einsatzgebiet geeignete Katalysatoren sind beispielsweise in den US-Patentschriften 3 991 039 bzw. 4 224 200 beschrieben.

Zur Herstellung gebrauchsfertiger Beschichtungs- oder Dichtungsmassen können die erfindungsgemäßen Verfahrensprodukte neben den bereits gekannten Komponenten noch weitere Hilfs- und Zustazmittel wie z.B. Weichmacher der bereits beispielhaft genannten Art, Streckmittel, Lösungsmittel, Füllstoffe, Pigmente, Verdickungsmittel, Alterungsschutzmittel sowie spezielle Zusatzstoffe zur Erzielung bestimmter Eigenschaften, wie beispielsweise Silane zur Verbesserung der Haftungseigenschaften, enthalten. Für die Brandschutz-Ausrüstung können flammhemmende Zusatzstoffe, wie z.B. Aluminiumoxidhydrat, Antimontrioxid oder halogenhaltige Zusatzstoffe wie z.B. PVC-Pulver mitverwendet werden; zur Erhöhung der elektrischen Leitfähigkeit können den Massen beispielsweise Graphit oder Metallpulver einverleibt werden. Der Zusatz von Gummimehl bzw. von Gummigranulat zur Verbilligung und Verbesserung der Abriebeigenschaften ist ebenfalls möglich. Ebenso können Emulgierhilfsmittel zur Dispergierung in Wasser eingesetzt werden.

Die erfindungsgemäßen Verfahrensprodukte eignen sich als Bindemittel für Dichtungsmassen aller Art, wie sie u.a. im Bauwesen, im Fahrzeug-, Schiffs- und Flugzeugbau oder bei der Herstellung von Isolierglasscheiben zur Abdichtung und Verklebung üblich sind. Die erfindungsgemäßen Verfahrensprodukte eignen sich auf zur Herstellung von Gießharzen, z.B. für die Herstellung von Abformmassen und für Vergußmassen auf dem Elektrosektor. Die refindungsgemäßen Verfahrensprodukte eignen sich auch sehr gut als Bindemittel für Beschichtungsmassen insbesondere zur Herstellung von dickschichtigen Beschichtungen beispielsweise zur Abdichtung von Betonbauwerken, für

Dachbeschichtungen oder für abriebfeste Beschichtungen im Fahrzeug- und Schiffsbau.

Die erfindungsgemäßen Verfahrensprodukte stellen darüber hinaus wertvolle Zusatzmittel für Epoxidharze dar. In derartigen Systemen wirken die erfindungsgemäßen Verfahrensprodukte als elastifizierend wirkende Härter. Derartige Zweikomponenten-Systeme auf Basis von Polyepoxiden der aus der technischen Epoxidchemie an sich bekannten Art und den erfindungsgemäßen Verfahrensprodukten eignen sich praktisch für alle Einsatzgebiete der oben beispielhaft genannten Art.

Die erfindungsgemäßen Verfahrensprodukte sind darüber hinaus auch als Vernetzer für beliebige, olefinische Doppelbindungen aufweisende Kunststoffe bzw. Kunststoffvorprodukte beispielsweise von Polybutandienharzen geeignet.

In den nachfolgenden Beispielen beziehen sich alle Prozentangaben auf Gewichtsprozente.

Beispiel 1
(Vergleichsbeispiel entsprechend Beispiel 2 der DE—AS 1 645 500)

348 g (2 Mol) eines Gemischs aus 80 Teilen 2,4- und 20 Teilen 2,6-Diisocyanatotoluol werden bei 100 bis 110°C mit 2004 g (1 Mol) eines Polypropylenglykols des mittleren Molekulargewichts 2004 unter Stickstoff zum entsprechenden NCO-Prepolymeren umgesetzt. Anschließend wird das so erhaltene NCO-Prepolymer mit 156 g (2 Mol) Mercaptoethanol in Gegenwart von 2,4 ml konz. Schwefelsäure bei 70°C umgesetzt, bis der NCO-Gehalt des Reaktionsgemischs auf 0,1% abgefallen ist. Das resultierende Harz weist eine Viskosität von 65 300 mPa.s bei 25°C auf.

Beispiel 2 (erfindungsgemäß)

Beispiel 1 wird wiederholt, mit dem einzigen Unterschied, daß anstelle der konz. Schwefelsäure 27,6 g (1,1%, bezogen auf Gesamtansatz) Bis-(2-ethylhexyl)-phosphat eingesetzt werden. Das resultierende Harz weist eine Viskosität von 37 500 mPa.s bei 25°C auf.

Beispiel 3
(Vergleichsbeispiel entsprechend Beispiel 1 der DE—OS 1 770 259, jedoch unter Verwendung von Mercaptoethanol anstelle von Mercaptobutanol)

600 g (0,2 Mol) eines durch Propoxylierung von Trimethylolpropan hergestellten Polyetherpolyols des Molekulargewichts 3000 werden unter Stickstoff mit 104,4 g (0,6 Mol) des Diisocyanats gemäß Beispiel 1 bei 115°C zum entsprechenden NCO-Prepolymeren umgesetzt. Anschließend werden dem Reaktionsansatz 46,8 g (0,6 Mol) 2-Mercaptoethanol zugegeben. Das Reaktionsgemisch wird bei 135°C gerührt bis der NCO-Gehalt auf unter 0,2% gesunken ist. Das resultierende Harz weist eine Viskosität von 272 Pa.s bei 25°C auf.

Beispiel 4 (erfindungsgemäß)

Beispiel 3 wird wiederholt mit dem Unterschied, daß vor Zugabe des Mercaptoethanols 3,7 g (0,5%, bezogen auf Gesamtgemisch, an Bis-(n-butyl)-phosphat) zudosiert werden. Das resultierende Harz weist eine Viskosität von 133,5 Pa.s (25°C) auf.

Beispiel 5
(Vergleichsbeispiel entsprechend Beispiel 1 der DE—OS 3 121 384)

6000 g (1 Mol) eines Polyetherpolyols des mittleren Molekulargewichts 6000, welches durch Propoxylierung von Trimethylolpropan und anschließende Ethoxylierung des Propoxylierungsprodukts (Molverhältnis PO:EO=78:22) erhalten worden ist wird mit 666 g (3 Mol) IPDI versetzt und dann unter Stickstoff als Schutzgas bei 100°C zum entsprechenden NCO-Prepolymer mit einem NCO-Gehalt von 1,8% umgesetzt. Anschließend werden 222,6 g (2,85 Mol) Mercaptoethanol hinzugefügt. Das Reaktionsgemisch wird dann bei 100°C so lange gerührt bis im IR-Spektrum keine NCO-Gruppe mehr zu sehen ist. Man erhält eine klare, praktisch farblose Flüssigkeit der Viskosität 110 Pa.s (23°C).

Beispiel 6
(Erfindungsgemäß)

Beispiel 5 wird wiederholt mit dem einzigen Unterschied, daß dem NCO-Prepolymeren von der Zugabe des Mercaptoethanols 34,5 g (0,5 %, bezogen auf Gesamtgemisch) Bis-(n-butyl)-phosphat hinzugefügt werden. Man erhält nunmehr ein Harz der Viskosität 40,2 Pa.s (23°C).

Beispiel 7
(Einsatz verschiedener saurer Zusatzmittel und der Einfluß auf die Viskosität)

5190 g (1,08 Mol) eines Polyetherpolyols des mittleren Molekulargewichts 4800, welches durch Propoxylierung von Trimethylolpropan und anschließende Ethoxylierung des Propoxylierungsproduktes (Molverhältnis PO:EO=83:17) erhalten worden ist, werden bei 50°C in Gegenwart von 70 ppm Dibutylzinndilaurat, bezogen auf das Gesamtgewicht der beiden Reaktionspartner, mit 810 g (3,64 Mol) IPDI zum entsprechenden NCO-Prepolymeren umgesetzt. Nach einer Reaktionsdauer von 1 Stunde ist der NCO-Gehalt auf 2,9% gesunken. Dem so erhaltenen NCO-Prepolymeren werden dann 0,5%, bezogen auf das Gewicht des NCO-Prepolymeren, Ölsäure einverleibt. Anschließend werden 323 g (4,14 Mol)

Mercaptoethanol hinzugefügt. Schließlich wird das Reaktionsgemisch so lange bei 100°C gerührt, bis der NCO-Gehalt auf unter 0,1% abgesunken ist (Beispiel 7A).

In sieben weiteren Parallelversuchen (Beispiele 7B—7H) wird völlig entsprechend verfahren, jedoch werden die in nachstehender Tabelle aufgelisteten Säuren anstelle der Ölsäure hinzugefügt.

Die Viskositäten der einzelnen Produkte sind in der folgenden Tabelle zusammengefaßt.

| Bsp. 7 | Zusatz | Viskosität (mPa.s, 25°C) |
|---|---|---|
| A | Ölsäure | 205 000 |
| B | Essigsäure | 151 000 |
| C | Dipropylphosphit | 142 000 |
| D | Trichloressigsäure | 95 000 |
| E | Schwefelsäure | trüb, Klumpenbildung |
| E | Phosphorsäure | trüb, heterogen |
| G | Bis-(2-ethylhexyl)-phosphat | 35 000 |
| H | Bis-(n-butyl)-phosphat | 29 000 |

**Patentansprüche**

1. Verfahren zur Herstellung von Oligourethanen mit endständigen Mercaptogruppen eines aus der Art und den Mengenverhältnissen der Ausgangsmaterialien errechenbaren mittleren Molekulargewichts von 2000—10000 durch Umsetzung von

a) organischen Polyisocyanaten mit

b) unterschüssigen Mengen an organischen Polyhydroxylverbindungen und

c) 0,8 bis 1,2-fach äquivalenten Mengen, bezogen auf den sich aus dem zum Einsatz gelangenden Mengenverhältnis von a) und b) ergebenden Überschuß an Isocyanatgruppen bzw. die im gegebenenfalls von überschüssigem Polyisocyanat a) befreiten Reaktionsprodukt von a) und b) vorliegenden Isocyanatgruppen einerseits und Hydroxylgruppen der Komponente c) andererseits, eines Mercaptoalkanols,

dadurch gekennzeichnet, daß man die Umsetzung mit dem Mercaptoalkanol c) in Gegenwart von

d) 0,01 bis 5 Gew.-%, bezogen auf das Gewicht der Komponenten a), b) und c), mindestens eines, mindestens eine an Phosphor gebundene Hydroxylgruppe aufweisenden Esters der Phosphorsäure durchführt.

2. Verfahren gemäß Anspruch 1, dadurch gekennzeichnet, daß man zunächst aus der Komponente a) und zumindest einem Teil der Komponente b) eine NCO-Prepolymer bzw. ein NCO-Semiprepolymer herstellt und dieses anschließend mit der Komponente c) oder einem Gemisch der Komponente c) mit der restlichen Menge der Komponente b) umsetzt.

3. Verfahren gemä7 Anspruch 1, dadurch gekennzeichnet, daß man die Komponente a) mit einem Gemisch der Komponenten b) und c) umsetzt.

4. Verfahren gemäß Anspruch 1 bis 3, dadurch gekennzeichnet, daß man als Komponente a) 1-Isocyanato-3,3,5-trimethyl-5-isocyanatomethylcyclohexan, 2,4-Diisocyanatotoluol dessen technischen Gemsiche mit 2,6-Diisocyanatotoluol oder Gemische von 1-Isocyanato-3,3,5-trimethyl-5-isocyanatomethylcyclohexan mit diesem Isomeren verwendet.

5. Verfahren gemäß Anspruch 1 bis 4, dadurch gekennzeichnet, daß man als Komponente b) eine Polyetherpolyol oder ein Polyetherpolyolgemisch einer (mittleren) Hydroxylfunktionalität von 2,5 bis 4 und eines (mittleren) Molekulargewichts von mindestens 2000 verwendet.

6. Verfahren gemäß Anspruch 1 bis 5, dadurch gekennzeichnet, daß man als Komponente c) Mercaptoethanol verwendet.

7. Verfahren gemäß Anspruch 1 bis 6, dadurch gekennzeichnet, daß man die Komponenten a) und b) in, einem NCO/OH-Äquivalentverhältnis von 1,8:1 bis 4:1 entsprechenden Mengen verwendet.

8. Verwendung der gemäß Anspruch 1 bis 7 erhältlichen, Mercaptogruppen aufweisenden Oligourethane als Bindemittel für oxidativ härtbare Beschichtungs- und Dichtungsmassen.

9. Verwendung der gemäß Ansrpuch 1 bis 7 erhältlichen Mercaptogruppen aufweisenden Oligourethane als Zusatzmittel für Epoxidharze.

10. Verwendung der gemäß Anspruch 1 bis 7 erhältlichen Mercaptogruppen aufweisenden Oligourethane als Vernetzer für beliebige, olefinische Doppelbindungen aufweisende Kunststoffe oder Kunststoffvorprodukte.

**Revendications**

1. Procédé de production d'oligouréthannes à groupes mercapto terminaux, d'un poids moléculaire moyen, calculable d'après la nature et les proportions quantitatives des matières de départ, de 2000 à 10 000, par réaction

a) de polyisocyanates organiques avec

b) des quantités déficitaires de composés polyhydroxyliques organiques et

c) des quantités équivalant à un facteur 0,8—1,2, par rapport à l'excès, résultant du rapport quantitatif utilisé de a) et b), de groupes isocyanato ou aux groupes isocyanato présents dans le produit de réaction de a) et b) éventuellement débarrassé du polyisocyanate a) en excès, d'une part, et aux groupes hydroxyle du composant c) d'autre part, d'un mercaptoalcanol,

caractérisé en ce qu'on conduit la réaction avec le mercaptoalcanol c) en présence

d) de 0,1 à 5% en poids, par rapport au poids des composants a), b) et c) d'au moins un ester d'acide phosphorique présentant au mions un groupe hydroxyle lié au phosphore.

2. Procédé suivant la revendication 1, caractérisé en ce qu'on prépare tout d'abord à partir du composant a) et d'au moins une partie du composant b) un NCO-prépolymère ou un NCO-semi-prépolymère et on fait ensuite réagir ce dernier avec le composant c) ou un mélange du composant c) avec la quantité restante du composant b).

3. Procédé suivant la revendication 1, caractérisé en ce qu'on fait réagir le composant a) avec un mélange des composants b) et c).

4. Procédé suivant les revendications 1 à 3, caractérisé en ce qu'on utilise comme composant a) le 1-isocyanato-3,3,5-triméthyl-5-isocyanatométhylcyclohexane, le 2,4-diisocyanatotoluène, ses mélanges techniques avec le 2,6-diisocyanatotoluène ou des mélanges de 1-isocyanato-3,3,5-triméthyl-5-isocyanatométhylcyclohexane avec ces isomères.

5. Procédé suivant les revendications 1 à 4, caractérisé en ce qu'on utilise comme composant b) un polyétherpolyol ou un mélange de polyétherpolyols de fonctionnalité hydroxyle (moyenne) de 2,5 à 4 et d'un poids moléculaire (moyen) au moins égal à 2000.

6. Procédé suivant les revendications 1 à 5, caractérisé en ce qu'on utilise comme composant c) le mercaptoéthanol.

7. Procédé suivant les revendications 1 à 6, caractérisé en ce qu'on utilise les composants a) et b) en quantités correspondant à un rapport d'équivalents NCO/OH de 1,8:1 à 4:1.

8. Utilisation des oligouréthannes porteurs de groupes mercapto, obtenus suivant les revendications 1 à 7, comme liants pour des compositions de revêtement et des compositions d'étanchéité durcissables par voie d'oxydation.

9. Utilisation des oligouréthannes porteurs de groupes mercapto obtenus conformément aux revendications 1 à 7 comme additifs pour résines époxyde.

10. Utilisation des oligouréthannes porteurs de groupes mercapto obtenus conformément aux revendications 1 à 7 comme agents de réticulation pour des matières plastiques ou des progéniteurs de matières plastiques quelconques, présentant des doubles liaisons oléfiniques.

**Claims**

1. A process for the production of mercapto-terminated oligourethanes having a molecular weight—calculable from the type of and quantitative ratios between the starting materials—in the range from 2,000 to 10,000 by reaction of

a) organic isocyanates with

b) sub-equivalent quantities of organic polyhydroxyl compounds and

c) 0.8 to 1.2 times the equivalent quantity, based on the excess of isocyanate groups arising out of the quantitative ratio between a) and b) used or on the isocyanate groups present in the reaction product of a) and b)—optionally freed from excess polyisocyanate a)—on the one hand and hydroxyl groups of component c) on the other hand, of a mercaptoalkanol,

characterized in that the reaction with the mercaptoalkanol c) is carried out in the presence of d) 0.01 to 5% by weight, based on the weight of components a), b) and c), of at least one ester of phosphoric acid containing at least one hydroxyl group attached to phosphorus.

2. A process as claimed in Claim 1, characterized in that an NCO prepolymer or an NCO semiprepolymer is initially prepared from component a) and at least part of component b) and is subsequently reacted with component c) or with a mixture of component c) with the remainder of component b).

3. A process as claimed in Claim 1, characterized in that component a) is reacted with a mixture of components b) and c).

4. A process as claimed in Claims 1 to 3, characterized in that 1-isocyanato-3,3,5-trimethyl-5-isocyanatomethyl cyclohexane, 2,4,4-diisocyanatotoluene, technical mixtures thereof with 2,6-diisocyanatotoluene or mixtures of 1-isocyanato-3,3,5-trimethyl-5-isocyanatomethyl cyclohexane with these isomers is/are used as component a).

5. A process as claimed in Claims 1 to 4, characterized in that a polyether polyol or a polyether polyol

mixture having an (average) hydroxyl functionality of 2.5 to 4 and an (average) molecular weight of at least 2,000 is used as component b).

6. A process as claimed in Claims 1 to 5, characterized in that mercaptoethanol is used as component c).

7. A process as claimed in Claims 1 to 6, characterized in that components a) and b) are used in quantities corresponding to an NCO/OH equivalent ratio of 1.8:1 to 4:1.

8. The use of the oligourethanes containing mercapto groups obtainable by the process claimed in Claims 1 to 7 as binders for oxidatively curing coating and sealing compounds.

9. The use of the oligourethanes containing mercapto groups obtainable by the process claimed in Claims 1 to 7 as additives for epoxy resins.

10. The use of the oligourethanes containing mercapto groups obtainable by the process claimed in Claims 1 to 7 as crosslinking agents for polymers or polymer intermediates containing olefinic double bonds.